# EUROPÄISCHE PATENTSCHRIFT

(11) **EP 3 221 785 B1**
(45) Veröffentlichungstag und Bekanntmachung des Hinweises auf die Patenterteilung: **23.05.2018**
(21) Anmeldenummer: 15794077.6
(22) Anmeldetag: 30.10.2015
(51) Int. Cl.: G06F 9/44, G06F 9/54

(54) **STEUERN EINES ONLINE-DIENSTES MITTELS EINER KRAFTFAHRZEUG-BEDIENEINRICHTUNG**
CONTROL OF AN ONLINE SERVICE BY MEANS OF A MOTOR VEHICLE OPERATOR CONTROL DEVICE
COMMANDE D'UN SERVICE EN LIGNE AU MOYEN D'UN DISPOSITIF DE COMMANDE D'UN VÉHICULE AUTOMOBILE

(30) Priorität: 20.11.2014 DE 102014017141
(43) Veröffentlichungstag der Anmeldung: 27.09.2017
(73) Patentinhaber: Audi AG, 85045 Ingolstadt (DE)
(72) Erfinder: SELLSCHOPP, Stefan, 85221 Dachau (DE)
(86) Internationale Anmeldenummer: PCT/EP2015/002178
(87) Internationale Veröffentlichungsnummer: WO 2016/078745

(56) Entgegenhaltungen:
- EP-A1- 2 752 765
- US-B1- 7 506 259

## Beschreibung

Die Erfindung betrifft ein Verfahren, um mittels einer Bedieneinrichtung eines Kraftfahrzeugs einen fahrzeugexternen Online-Dienst zu steuern. Durch das Verfahren wird eine Dienstfunktion des Online-Dienstes in Abhängigkeit von einer Bedieneingabe eines Benutzers der Bedieneinrichtung ausgewählt und aktiviert. Zu der Erfindung gehören auch eine Servervorrichtung zum Bereitstellen des Online-Dienstes sowie ein Kraftfahrzeug mit der beschriebenen Bedieneinrichtung.

In einem Kraftfahrzeug kann ein onlinebasierter Dienst bereitgestellt sein, wobei ein Dienst hier eine Sammlung aus mehreren Dienstfunktionen darstellt, die durch eine Serveranordnung beispielsweise über das Internet bereitgestellt werden. Beispielsweise kann ein Online-Wetterdienst bereitgestellt sein, wobei als Dienstfunktionen beispielsweise die Auswahl eines geographischen Ortes und/oder eines Prognosezeitraums für das Wetter bereitgestellt sein können. Die Bereitstellung des Online-Dienstes im Kraftfahrzeug kann durch eine Netzwerkverbindung ermöglicht sein, über welche das Kraftfahrzeug mit einem stationären Netzwerk, insbesondere dem Internet, verbunden sein kann. In der Regel werden Online-Dienste als browser-basierte Dienste bereitgestellt, das heißt eine graphische Benutzerschnittstelle (GUI - Graphical User Interface) wird durch einen Internetbrowser im Kraftfahrzeug realisiert.

Nach Möglichkeit soll die Integration der Online-Dienste in das Kraftfahrzeug ohne Bruch in der Darstellung erfolgen, das heißt es soll für den Benutzer keinen sichtbaren Unterschied zwischen Texten und/oder Listen eines fahrzeuginternen Onboard-Dienstes, der unabhängig von der Netzwerkverbindung im Kraftfahrzeug bereitgestellt ist, und einem Online-Dienst vorhanden sein. Da die graphische Darstellung und die Bedienung von Onboard-Diensten in einem Kraftfahrzeug vom Fahrzeugtyp abhängt, muss entsprechend für jeden Fahrzeugtyp auch eine Servervorrichtung im Internet bereitgestellt sein, die für jeden Fahrzeugtyp den Online-Dienst separat implementiert oder bereitstellt und hierbei Fahrzeug spezifische Ausstattungsmerkmale, wie beispielsweise die zur Verfügung stehenden Bedienelemente (Drehsteller oder Berührungssensitive Fläche, d.h. Touchpad) einerseits und/oder graphisches Design der graphischen Benutzerschnittstelle andererseits.

Die Bereitstellung eines bereits existierenden Online-Dienstes für ein neues Fahrzeugmodell erzeugt somit bei der Entwicklung des Kraftfahrzeugs auch auf der Serverseite, das heißt bei der Pflege der Servervorrichtung, einen hohen Aufwand. Die Entwicklung des Kraftfahrzeugs und der serverseitigen Online-Dienste müssen gemeinsam erfolgen, was Abhängigkeiten und erhöhte Komplexität verursacht. Für einen Fahrzeugtyp mit neuartigem Bedienelement müssen die Online-Dienste aufgrund abweichender Bedienkonzepte teilweise sogar neu entwickelt werden, was Synergien reduziert und Entwicklungspotenzial blockiert und somit die Entwicklung neuer Online-Dienste behindert.

Aus der DE 10 2009 012 533 A1 ist bekannt, dass Daten aus einer fahrzeugexternen Datenquelle in Abhängigkeit von einem dynamischen Abfrageprofil zusammengetragen werden können und für eine Ausgabevorrichtung eines Kraftfahrzeugs aufbereitet werden können. Das Abfrageprofil beschreibt den Fahrzeugtyp und/oder benutzerspezifische Vorlieben bei der Auswahl der Daten.

Aus der DE 2012 019 063 A1 ist ein Verfahren zum Bereitstellen von Daten in einem Kraftwagen beschrieben, das ein Suchergebnis einer fahrzeugexternen Datenquelle bereitstellt und den Benutzer auf einer Anzeigeeinrichtung des Kraftwagens nur solche Applikationen zur Aktivierung bereitstellt, die überhaupt dafür geeignet sind, die bereitgehaltenen Suchergebnisse darzustellen.

Aus der DE 10 2010 039 440 A1 ist eine Kontrolleinheit für ein Kraftfahrzeug beschrieben, welche an einem beliebigen Ort im Kraftfahrzeug angeordnet sein kann und Darstellungsgeräte des Kraftfahrzeugs dahingehend steuert, dass jede Datenquelle Daten an jede Ausgabeeinheit übermitteln kann und hierbei die Daten für die Ausgabe an der jeweiligen Ausgabeeinheit angepasst sind.

Die US 7,506,259 B1 beschreibt ein Verfahren, das es ermöglicht, Benutzervorlieben und Geräteeigenschaften zu verwenden, um eine angepasste Schnittstelle für Dienste zu generieren und insbesondere eine Interaktion zwischen heterogenen mobilen Geräten und Diensten in einer lokalen Umgebung durch das eigene Gerät zu ermöglichen.

Der Erfindung liegt die Aufgabe zugrunde, einen fahrzeugexternen Online-Dienst von einem Kraftfahrzeug aus mittels einer Bedieneinrichtung des Kraftfahrzeugs zu steuern.

Die Aufgabe wird durch die Gegenstände der unabhängigen Patentansprüche gelöst. Vorteilhafte Weiterbildungen der Erfindungen sind durch die Merkmale der abhängigen Patentansprüche gegeben.

Erfindungsgemäß bereitgestellt ist ein Verfahren zum Steuern des fahrzeugexternen Online-Dienstes mittels der Bedieneinrichtung des Kraftfahrzeugs. Der Online-Dienst kann beispielsweise als Internetportal durch eine Servervorrichtung des Internets bereitgestellt sein. Mit anderen Worten kann eine Online-Bedienschnittstelle, also eine über eine Netzwerkverbindung an der Servervorrichtung erreichbare Bedienschnittstelle, durch die Servervorrichtung bereitgestellt sein, wobei die Bedienschnittstelle die Dienstfunktionen zur Auswahl darstellt. In an sich bekannter Weise, wie es beispielsweise von einer browser-basierten Bedienung bekannt ist, wird eine von einem Benutzer an der Bedieneinrichtung durchgeführte Bedieneingabe ermittelt. Die Bedieneingabe kann beispielsweise ein "Anklicken" einer Bedienfläche, beispielsweise eines Auswahlknopfes (Button), sein. In Abhängigkeit von der Bedieneingabe wird eine von mehreren Dienstfunktionen des Online-Dienstes ausgewählt, beispielsweise das Anzeigen einer Wetterprognose bei einem Wetter-Online-Dienst. Das Auswählen bedeutet hierbei, dass die Dienstfunktion aktiviert und/oder für eine Aktivierung markiert wird.

Bei einem Verbindungsaufbau zu einer den Online-Dienst bereitstellenden Servervorrichtung wird eine Liste der in der Servervorrichtung verfügbaren Online-Dienste in Abhängigkeit von fahrzeugspezifischen Kennungsdaten erzeugt und an das Kraftfahrzeug ausgesendet. Dabei enthalten die Kennungsdaten Ausstattungsdaten, welche eine technische Ausstattung des Kraftfahrzeugs beschreiben. Hierdurch ergibt sich der Vorteil, dass die im Kraftfahrzeug vorhandenen technischen Randbedingungen bei der Auswahl der Online-Dienste berücksichtigt werden.

Die im Kraftfahrzeug vorhandenen technischen Randbedingungen werden bei der Auswahl der Online-Dienste berücksichtigt, indem die Liste die tatsächlich im Kraftfahrzeug durch den Benutzer betreibbaren Online-Dienste angibt.

Ein Abrufen des zu steuernden Online-Dienstes von der Servervorrichtung durch das Kraftfahrzeug erfolgt dabei anhand einer Schnittstellenbeschreibung des Online-Dienstes.

Um nun von dem Kraftfahrzeug aus den Online-Dienst zu bedienen oder zu steuern, ohne dass hierzu der Online-Dienst an das spezielle oder spezifische Kraftfahrzeug angepasst sein muss, d.h. an die verfügbaren Bedienelemente, sieht die Erfindung folgendes vor. Es werden die fahrzeugindividuell bei der Bedieneinrichtung des Kraftfahrzeugs verfügbaren Bedienelemente ermittelt. Beispielsweise wird also ermittelt, ob das Kraftfahrzeug einen Dreh-Drück-Steller aufweist oder eine berührungsempfindliche Bedienfläche (Touchpad) oder eine Tastenleiste. Hierzu kann beispielsweise pauschal ein Fahrzeugtyp ermittelt werden, falls durch den Fahrzeugtyp die verfügbaren Bedienelemente definiert oder festgelegt sind. Des Weiteren werden durch die Servervorrichtung für das Kraftfahrzeug Konverterdaten in Abhängigkeit von einem Fahrzeugtyp des Kraftfahrzeugs bereitgestellt. Die Konverterdaten enthalten eine Steuervorschrift zum Steuern der Auswahl einer Dienstfunktion des Online-Dienstes in Abhängigkeit von Betätigungssignalen der ermittelten Bedienelemente. Die Konverterdaten stellen also eine Abbildungsvorschrift dar, um die beim Betätigen der Bedienelemente erzeugten Betätigungssignale auf Steuersignale für die Auswahl einer Dienstfunktion abzubilden. Ein Drehsignal eines Dreh-Drück-Stellers kann hierdurch beispielsweise in ein Steuersignal für ein Auswahlmenü abgebildet werden. Eine Zeichenspur auf einem Touchpad kann hierdurch beispielsweise in ein Steuersignal für einen Mauszeiger abgebildet werden. Bei dem Verfahren wird dadurch insgesamt das Auswählen der Dienstfunktion also in Abhängigkeit von dem bei der Bedieneingabe betätigten Bedienelement und in Abhängigkeit von den Konverterdaten durchgeführt.

Durch die Erfindung ergibt sich der Vorteil, dass der Online-Dienst unabhängig vom Fahrzeugtyp bereitgestellt werden kann und die eigentliche Auswahl der Dienstfunktionen fahrzeugindividuell mittels der Konverterdaten gesteuert wird. Durch Bereitstellen passender Konverterdaten für einen bestimmten Fahrzeugtyp kann hierdurch ein Kraftfahrzeug dieses Fahrzeugtyps den Online-Dienst steuern, ohne dass der Online-Dienst selbst angepasst werden muss.

In einer Weiterbildung der Erfindung werden die Konverterdaten in der den Online-Dienst bereitstellenden Servervorrichtung durch eine Darstellungsschicht bereitgestellt. Die Darstellungsschicht empfängt von dem Kraftfahrzeug die Betätigungssignale der Bedienelemente und bildet diese auf die Steuersignale zum Auswählen der Dienstfunktion ab. Hierdurch ergibt sich der Vorteil, dass das Kraftfahrzeug die Konverterdaten nicht selbst verarbeiten können muss.

In einem weiteren Aspekt der Erfindung ist eine Servervorrichtung bereitgestellt. Diese erfindungsgemäße Servervorrichtung weist eine Kommunikationseinrichtung zum Ankoppeln der Servervorrichtung an das Internet und eine Prozessoreinrichtung auf. Die Kommunikationseinrichtung kann z.B. auf Grundlage eines Ethernet-Controller realisiert sein. Die Prozessoreinrichtung ist dazu ausgelegt, einen Online-Dienst bereitzustellen, der unabhängig von einem Fahrzeugtyp ausführbare Dienstfunktionen aufweist. Des Weiteren ist die Prozessoreinrichtung dazu ausgelegt, von jedem den Online-Dienst über eine Netzwerkverbindung anfragenden Kraftfahrzeug einen jeweiligen Fahrzeugtyp zu ermitteln. In Abhängigkeit von dem ermittelten Fahrzeugtyp stellt die Prozessoreinrichtung Konverterdaten bereit. Diese Konverterdaten enthalten die Steuervorschrift zum Steuern einer Auswahl einer der Dienstfunktionen in Abhängigkeit von Betätigungssignalen von Bedienelementen einer Bedieneinrichtung des Kraftfahrzeugs.

Diese Konverterdaten können dann in der beschriebenen Weise durch eine Darstellungsschicht der Servervorrichtung genutzt werden.

Zusätzlich oder alternativ dazu können die Konverterdaten von der Servervorrichtung über die Netzwerkverbindung auch an das Kraftfahrzeug ausgesendet werden. In diesem Fall muss das Kraftfahrzeug dazu ausgelegt sein, die Konverterdaten selbst zu verarbeiten. Hierzu sieht ein Aspekt der Erfindung ein entsprechendes Kraftfahrzeug vor. Das erfindungsgemäße Kraftfahrzeug ist dazu ausgelegt, von einer fahrzeugexternen Servervorrichtung über eine Netzwerkverbindung für eine Bedieneinrichtung des Kraftfahrzeugs die Konverterdaten zu empfangen. Des Weiteren ist das Kraftfahrzeug dazu ausgelegt, mittels der empfangenen Konverterdaten über die Netzwerkverbindung eine der Dienstfunktionen des Online-Dienstes in Abhängigkeit von einer an der Bedieneinrichtung empfangenen Benutzereingabe eines Benutzers und in Abhängigkeit von den Konverterdaten auszuwählen. Das erfindungsgemäße Kraftfahrzeug weist den Vorteil auf, dass es durch Empfangen der entsprechenden Konverterdaten dynamisch zur Steuerung unterschiedlicher Online-Dienste umkonfiguriert werden kann.

Im Folgenden sind Weiterbildungen der Erfindung beschrieben, wobei die Weiterbildungen jeweils im Zusammenhang mit dem erfindungsgemäßen Verfahren beschrieben sind. Zu der Erfindung gehören auch Weiterbildungen der erfindungsgemäßen Servervorrichtung, die dieselben Merkmale aufweisen, wie sie im Folgenden im Zusammenhang mit den Weiterbildungen des erfindungsgemäßen Verfahrens beschrieben worden sind.

In einer Weiterbildung werden die Konverterdaten als Darstellungsregeln an das Kraftfahrzeug übertragen, wie es bereits im Zusammenhang mit dem erfindungsgemäßen Kraftfahrzeug beschrieben worden ist.

In einer Weiterbildung enthalten die Konverterdaten nicht nur die beschriebene Steuervorschrift zum Abbilden der Betätigungssignale der Bedienelemente auf eine Auswahl einer Dienstfunktion. Zusätzlich enthalten die Konverterdaten eine Graphikkonfiguration oder Darstellungsvorschrift für Anzeigeelemente des Online-Dienstes. Durch die Darstellungsvorschrift wird zumindest eine graphische Eigenschaft der Anzeigeelemente festgelegt. Bei dieser Ausführungsform ist vorgesehen, dass in dem Kraftfahrzeug einer Anzeigeeinheit der Bedieneinrichtung für fahrzeuginterne Onboard-Dienste, die unter unabhängig von einer Netzwerkverbindung bereitgestellt sind, ebenfalls eine Darstellungsvorschrift bereitgestellt ist. Durch diese Darstellungsvorschrift wird zumindest eine graphische Eigenschaft von Anzeigeelementen der Onboard-Dienste festgelegt, also insbesondere ihr Erscheindungsbild oder Aussehen. Beispielsweise kann eine Hintergrundfarbe und/oder eine Textgröße und/oder ein graphisches Design von Linienelementen durch die Graphikkonfiguration festgelegt sein. Gemäß der Weiterbildung entsprechen nun die Darstellungsvorschrift für die Onboard-Dienste und die Darstellungsvorschrift für den Online-Dienst einander. Hierdurch ergibt sich der Vorteil, dass die Onboard-Dienste und der Online-Dienst für den Benutzer visuell nicht voneinander zu unterscheiden sind, was das Erscheinungsbild der jeweiligen graphischen Benutzerstelle angeht. Dies erhöht den Integrationsgrad des Online-Dienstes in das Bedienkonzept des Kraftfahrzeugs.

Eine hierzu vorgesehene Weiterbildung weist eine Blockiereinrichtung auf. Durch die Blockiereinrichtung wird in Abhängigkeit von einer Ablehungseingabe des Benutzers des Kraftfahrzeugs eine Übertragung der Darstellungsvorschrift für den Online-Dienst blockiert. Hierdurch ergibt sich der Vorteil, dass der Benutzer eine Kontrolle über die Installation fahrzeugexterner Daten in der Benutzerbedieneinrichtung gegeben.

In einer Weiterbildung der Erfindung wird bei einem Verbindungsaufbau zu einer den Online-Dienst bereitstellenden Servervorrichtung die Liste der in der Servervorrichtung verfügbaren Online-Dienste an das Kraftfahrzeug ausgesendet. Hierbei handelt es sich aber nicht um eine pauschale Liste, sondern die Liste wird in Abhängigkeit von benutzerspezifischen Kennungsdaten erzeugt und an das Kraftfahrzeug ausgesendet. Hierdurch ergibt sich der Vorteil, dass das Kraftfahrzeug eine Liste von tatsächlich im Kraftfahrzeug durch den Benutzer aus nutzbaren oder betreibbaren Online-Diensten erhält. Dabei können die Kennungsdaten Berechtigungsdaten enthalten, welche eine Lizenzierung der Online-Dienste für den Benutzer beschreiben. Hierdurch kann die Auswahl der Online-Dienste in der Servereinrichtung in Abhängigkeit davon begrenzt werden, für welche Online-Dienste der Benutzer eine Zugangsberechtigung oder Autorisierung hat.

In einer Weiterbildung der Erfindung werden die Konverterdaten und/oder der Online-Dienst versioniert bereitgestellt. Mit anderen Worten wird zu jeder in der Servervorrichtung bereitgestellten Version des Online-Dienstes eine Versionskennung gespeichert. Hierdurch ergibt sich der Vorteil, dass bei einer Weiterentwicklung eines Fahrzeugtyps und/oder des Online-Dienstes dennoch in automatisierter Weise sichergestellt werden kann, da ein spezifisches Kraftfahrzeug einen passenden Online-Dienst bereitgestellt bekommt, dessen Dienstfunktionen in dem Kraftfahrzeug aktivierbar und/oder nutzbar und/oder durchführbar sind.

Im Folgenden sind Ausführungsbeispiele der Erfindung beschrieben. Hierzu zeigt:
- Fig. 1: eine schematische Darstellung einer Ausführungsform der erfindungsgemäßen Servervorrichtung und des erfindungsgemäßen Kraftfahrzeugs;
- Fig. 2: eine schematische Darstellung einer weiteren Ausführungsform des erfindungsgemäßen Kraftfahrzeugs, welches einen anderen Fahrzeugtyp als das Kraftfahrzeug von Fig. 1 aufweist;
- Fig. 3: eine schematische Darstellung eines erfindungsgemäßen Kraftfahrzeugs und einer erfindungsgemäßen Servervorrichtung sowie die Aufteilung von Funktionen zwischen diesen beiden gemäß einer Ausführungsform der Erfindung; und
- Fig. 4: eine schematische Darstellung der Aufteilung eines Online-Dienstes gemäß einer anderen Ausführungsform des erfindungsgemäßen Verfahrens.

Bei den im Folgenden erläuterten Ausführungsbeispielen handelt es sich um bevorzugte Ausführungsformen der Erfindung. Bei den Ausführungsbeispielen stellen aber die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

In den Figuren sind funktionsgleiche Elemente jeweils mit denselben Bezugszeichen versehen.

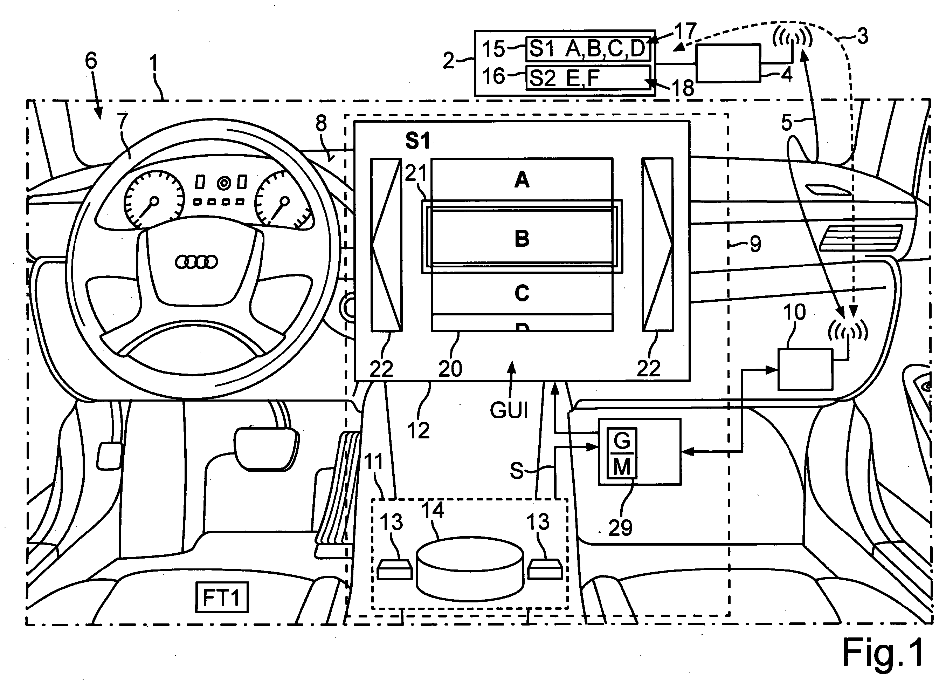

Fig. 1 zeigt ein Kraftfahrzeug 1 und eine fahrzeugexterne Servervorrichtung 2, die über eine Netzwerkverbindung 3 mit dem Kraftfahrzeug gekoppelt sein kann. Die Netzwerkverbindung 3 kann beispielsweise über das Internet 4 und eine Funkverbindung 5 bereitgestellt sein.

Bei dem Kraftfahrzeug 1 kann es sich beispielsweise um einen Kraftwagen, insbesondere einem Personenkraftwagen handeln. In Fig. 1 sind vom Kraftfahrzeug 1 ein Fahrzeuginnenraum 6 mit einem Lenkrad 7, einem Armaturenbrett 8, eine Bedieneinrichtung 9 und ein Funkmodul 10 dargestellt. Mittels dem Funkmodul 10 kann die Funkverbindung 5 zum Internet 4 bereitgestellt sein. Die Funkeinrichtung 10 kann beispielsweise ein Mobilfunkmodul, beispielsweise ein UMTS-Modul (UMTS - Universal Mobile Telecommunications System) oder ein LTE-Modul (LTE - Long Term Evolution), oder ein W-Lan-Modul (W-Lan - Local Area Network) sein.

Die Bedieneinrichtung 9 kann eine Betätigungseinheit 11 und eine Anzeigeeinheit 12 aufweisen. Es kann eine Steuereinheit 13 der Bedieneinrichtung 9 bereitgestellt sein, durch welche Betätigungssignale S von Bedienelementen 13, 14 in Abhängigkeit von einer Betätigung durch einem (nicht dargestellten) Benutzer erzeugt werden können. Die Anzeigeeinrichtung 12 kann beispielsweise durch einen Bildschirm bereitgestellt sein, der an dem Armaturenbrett 8 angeordnet sein kann.

Die Servervorrichtung 2 kann beispielsweise durch einen oder mehrere Computer bereitgestellt sein. Die Servervorrichtung 2 kann über eine Kommunikationseinrichtung, z.B. einen Ethernet-Controller oder einen Router, mit dem Internet verbunden sein. Die Servervorrichtung 2 kann dazu ausgelegt sein, im Internet 4 einen oder mehrere Online-Dienste 15, 16 bereitzustellen. Jeder Online-Dienst 15, 16 kann jeweils Dienstfunktionen 17, 18 umfassen. Der in Fig. 1 dargestellte Online-Dienst 15 (S1 benannt) kann beispielsweise Dienstfunktionen a, b, c, d aufweisen. Beispielsweise kann der Online-Dienst S1 eine Wettervorhersage sein. Die Dienstfunktionen a, b, c, d können beispielsweise umfassen: a) Ortsauswahl, b) Auswahl eines Zeitraums, c) Wetterhistorie anzeigen, d) Wolkenbild anzeigen. Der Online-Dienst 16 (S2 genannt) kann beispielsweise ein Nachrichtendienst sein. Die Dienstfunktion e, f können beispielsweise sein: e) Auswahl eines Themengebiets, f) Anzeigen weiterer Nachrichten zu einem Nachrichtenartikel.

In dem in Fig. 1 veranschaulichten Beispiels ist über die Netzwerkverbindung 3 durch die Bedieneinrichtung 9 der Online-Dienst 15 (S1) angefragt worden. Das Problem ist nun, wie dem Benutzer im Kraftfahrzeug 1 von dem Online-Dienst S1 die Dienstfunktionen a, b, c, d verfügbar gemacht werden. Zum einen muss auf der Anzeigeeinrichtung 12 eine Auswahl der Dienstfunktionen a, b, c, d ermöglicht sein. Zum anderen muss der Benutzer zum Auswählen die Betätigungseinrichtung 11 benutzen können mit ihren Bedienelementen 13, 14.

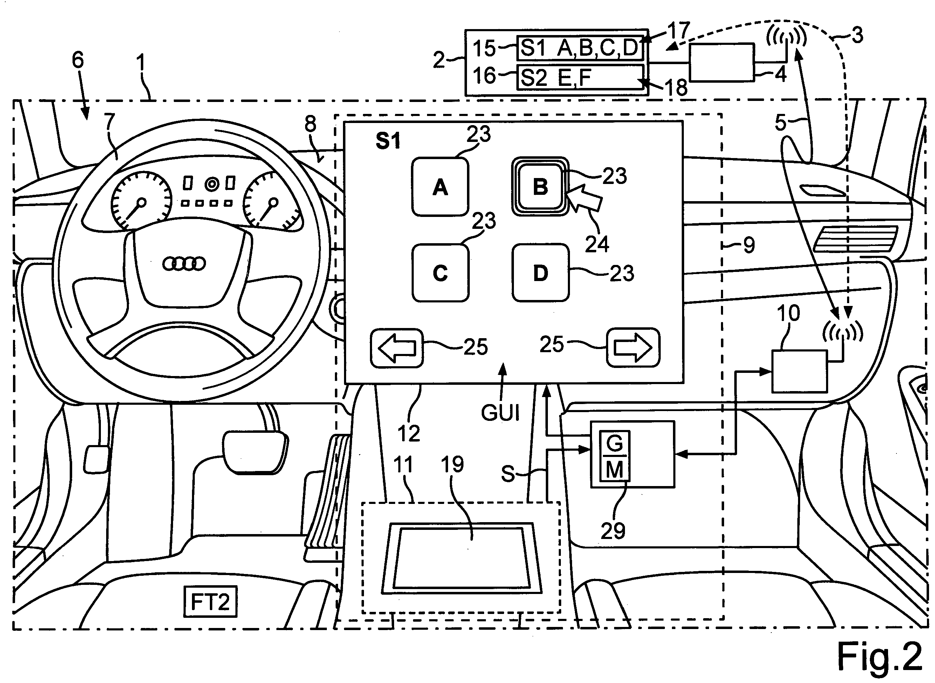

Zur besseren Veranschaulichung des Problems wird auf Fig. 2 verwiesen.

In Fig. 2 ist ein weiteres Kraftfahrzeug veranschaulicht, wobei für die Vereinfachung der Darstellung dieselben Bezugszeichen wie in Fig. 1 für einander korrespondierende Elemente verwendet worden sind. Zur Unterscheidung sind die Fahrzeuge durch ihren Fahrzeugtyp FT1, FT2 unterschieden. Beispielsweise kann der Fahrzeugtyp FT1 ein Kleinwagen sein und der Fahrzeugtyp FT2 eine Luxuslimousine. Entsprechend unterscheiden sich die Ausstattungen und auch das Fahrzeugtyp-spezifische Design der Anzeigeinhalte GUI auf der Anzeigeeinrichtung 12.

Wichtiger Unterschied bei dem Kraftfahrzeug in Fig. 2 ist, dass dessen Betätigungseinrichtung 11 nicht eines der Bedienelemente 13, 14 aufweisen muss, sondern ein davon verschiedenes Bedienelement 19 aufweisen kann. Beispielsweise kann angenommen werden, dass die Bedienelemente 13 jeweils eine Taste darstellen und das Bedienelement 14 ein Dreh-Drück-Steller. Unterschied dazu ist das Bedienelement 19 beispielsweise ein Touchpad. Entsprechend ergeben sich unterschiedliche Eingabemodi oder Eingabemöglichkeiten.

Ein weiterer wichtiger Unterschied ist, wie passend zu der Betätigungseinrichtung 11 auf der Anzeigeeinrichtung 12 die Auswahl der Dienstfunktionen a, b, c, d visualisiert wird. In Fig. 1 ist gezeigt, dass zum Auswählen ein Auswahlmenü 20 bereitgestellt ist, in welchem ein Auswahlelement 21 auf die auszuwählenden Dienstfunktion a, b, c, d verschoben werden kann. Dies kann beispielsweise in Abhängigkeit von Betätigungssignalen S des Bedienelements 14, also z.B. des Dreh-Drück-Stellers, erfolgen. Durch Bedienfelder 22 kann beispielsweise zwischen einzelnen Dienstfunktionen S1, S2 umgeschaltet werden.

Das Betätigen eines Dreh-Drück-Stellers kann sich von den Bedienmöglichkeiten des Bedienelements 19 unterscheiden, d.h. beispielsweise des Touchpads. Daher kann in dem Kraftfahrzeug von Fig. 2 die Auswahl der Dienstfunktion a, b, c, d durch Auswahlfelder 23 realisiert sein, die beispielsweise mittels eines Zeigers 24 ausgewählt werden können, der durch Berühren und Streichen an den Bedienelementen 19 positioniert werden kann. Weitere Bedienfelder 25 können für das Umschalten zwischen den Online-Diensten S1, S2 vorgesehen sein.

Bei der Servervorrichtung 2 ist es dennoch nicht nötig, für die unterschiedlichen Betätigungseinrichtungen 11 der Fahrzeugtypen FT1, FT2 jeweils eine eigene Implementierung der Online-Dienste S1, S2 bereitzustellen. Es können dieselben Implementierungen der Dienstfunktionen a, b, c, d des Online-Dienstes S1 und entsprechend auch der Dienstfunktionen e, f des Online-Dienstes S2 vorgesehen sein.

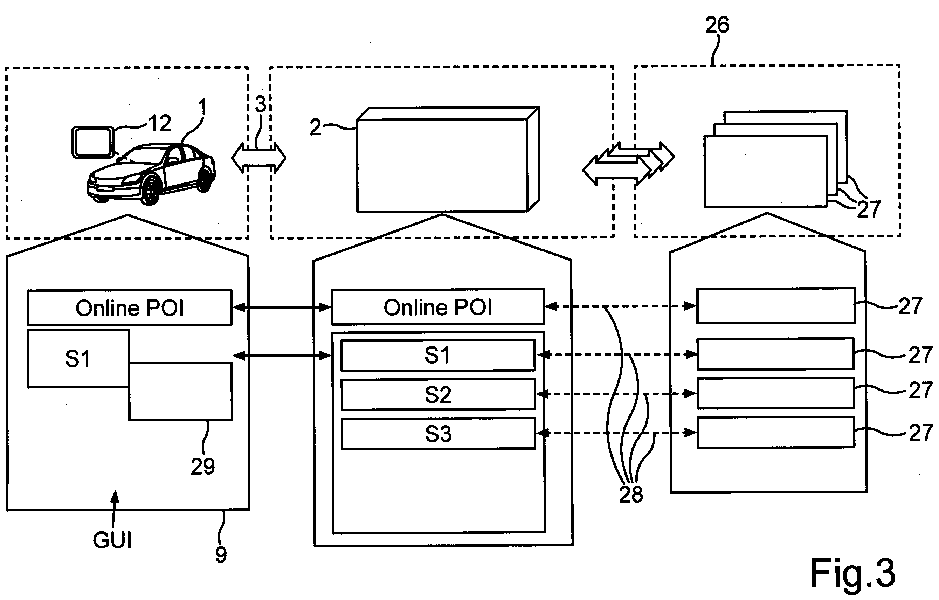

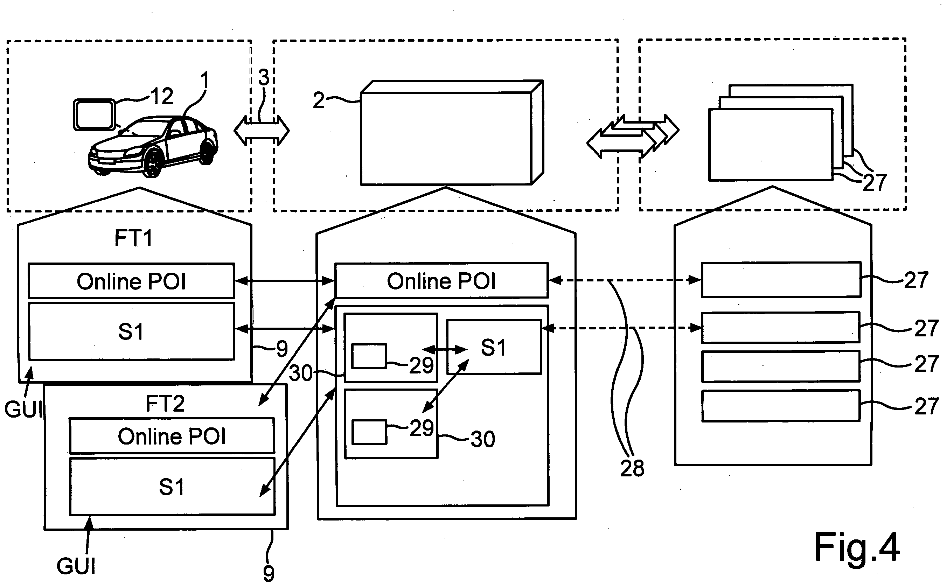

Zum Konvertieren oder Anpassen der Betätigungssignale S der jeweiligen Betätigungseinrichtungen 11 der Fahrzeugtypen FT1, FT2 und der fahrzeugtyp-spezifischen graphischen Benutzerschnittstellen GUI der Anzeigeeinrichtungen 12 an die Online-Dienste 15, 16 können zwei Konzepte vorgesehen sein, die in Fig. 3 und Fig. 4 veranschaulicht sind.

Im Folgenden wird zunächst auf das Anpassungskonzept gemäß Fig. 3 eingegangen, das auch den Ausführungsbeispielen von Fig. 1 und Fig. 2 zugrunde liegen kann.

In Fig. 3 und Fig. 4 ist noch einmal die Netzwerkverbindung 3 zwischen dem Kraftfahrzeug 1 und der Servervorrichtung 2 veranschaulicht. Des Weiteren ist schematisch der Anzeigeinhalt 9 auf der Anzeigeeinrichtung 12 und die verfügbaren Online-Dienste S1, S2, S3 auf der Servervorrichtung 2 dargestellt. Des Weiteren ist dargestellt, dass zusätzlich eine (in Fig. 1 und Fig. 2 nicht dargestellte) Suchfunktion für Navigationsziele (Online-POI, Points of Interest) bereitgestellt sein kann. Jeder der Online-Services S1, S2, S3 und die Online-Suche können aufgrund ihrer Entkopplung von den Fahrzeugtypen FT1, FT2 sogar außerhalb der Servervorrichtung 2 selbst durch Drittanbieter 26 im Internet bereitgestellt sein, sogenannte Kontent-Servern 27. Es lassen sich sogar die Verknüpfungen zwischen dem Online-Dienst S1, S2, S3 und der Online-Suche Online-PUI der Servervorrichtung 2 zu den Kontent-Servern 27 (Kontent-Server-Inhalts-Anbieter) variabel gestalten, was durch gestrichelte Dienstverknüpfungen 28 symbolisiert ist.

Um beispielsweise den Online-Dienst S1 betätigen zu können, können durch die Servervorrichtung 2 für das jeweilige Kraftfahrzeug 1 entsprechend dem oder in Abhängigkeit vom Fahrzeugtyp FT1 Konverterdaten 29 bereitgestellt sein. Die Konverterdaten 29 können eine Steuervorschrift M (M - Mapping - Zuordnungsregel) und eine graphische Darstellungsvorschrift G enthalten. Die Konverterdaten 29 können beispielsweise als eine Datei im Formal "State-Chart-XML" bereitgestellt sein.

Durch die Steuervorschrift M kann beschrieben oder eingestellt oder vorgesehen sein, in welcher Weise durch die Bediensignale S der Bedienelemente 13, 14 im Fahrzeugtyp 1 beziehungsweise des Bedienelements 19 im Fahrzeugtyp FT2 die Auswahl einer Dienstfunktion a, b, c, d realisiert werden soll. Beispielsweise kann bei einem Dreh-Druck-Steller festgelegt sein, dass eine Rechtsdrehung und eine Linksdrehung jeweils einen Wechsel der Auswahl zwischen den Dienstfunktionen a, b, c, d bewirkt. Eine Taste, wie beispielsweise das Bedienelement 13, kann dahingehend zugeordnet werden, dass einen Wechsel zwischen den Dienstfunktionen S1, S2 erfolgt. Durch die Darstellungsvorschrift G kann bei einem Fahrzeugtyp FT1 beispielsweise festgelegt werden, dass das Bedienmenü 20 und das Auswahlelement 21 dargestellt werden. Genauso können die Bedienflächen 22 definiert sein.

Durch die Darstellungsvorschrift G für den Fahrzeugtyp FT2 können die Auswahlflächen 23 und die Auswahlmöglichkeiten mittels des Zeigers 24 in der beschriebenen Weise festgelegt sein. Des Weiteren können die Schaltflächen 25 festgelegt sein.

Das Kraftfahrzeug 1 kann beispielsweise seinen jeweiligen Fahrzeugtyp FT1, FT2 an die Servervorrichtung 2 melden.

Ein Benutzer eines Kraftfahrzeugs 1 des Fahrzeugtyps FT1 kann nun durch Betätigen der Bedienelemente 13, 14 mithilfe der graphischen Benutzerschnittstelle GUI, wie sie sich durch die Darstellungsvorschrift G ergibt, eine Auswahl treffen, da die Betätigungssignale S in geeigneter Weise durch die Steuervorschrift M in Auswahlsignale abgebildet oder übertragen werden. Das Auswahlsignal kann als Funktionsauswahl an diese Vorrichtung 2 übertragen werden, wodurch dann die ausgewählte Dienstfunktion auf der Servervorrichtung 2 aktiviert werden kann.

In Fig. 4 ist eine alternative Realisierung veranschaulicht, bei welcher die Konverterdaten 29 nicht zu dem jeweiligen Kraftfahrzeug übertragen werden müssen. Stattdessen ist in der Servervorrichtung 30 für jeden Fahrzeugtyp FT1, FT2 eine Darstellungsschicht 30 bereitgestellt, über welche die Netzwerkverbindung vom jeweiligen Kraftfahrzeug 1 hin zum Online-Dienst S1, S2, S3 geführt ist. Mit anderen Worten werden das Kraftfahrzeug 1 und der jeweilige Online-Dienst S1, S2, S3 über eine fahrzeugspezifische Darstellungsschicht 30 gekoppelt. In der Darstellungsschicht 30 können jeweils Fahrzeugtyp-spezifische Konverterdaten 29 vorgesehen oder bereitgestellt sein.

Somit erfolgt in beiden Varianten gemäß Fig. 3 und Fig. 4 die Bereitstellung von Online-Diensten in der Weise, dass keine direkte Abhängigkeit der serverseitigen Online-Dienste von dem jeweiligen Bedienkonzept besteht, wie es in jedem Fahrzeugtyp FT1, FT2 durch die bereitgestellten Betätigungseinrichtungen 11 und die Anzeigeeinrichtung 12 realisiert ist. Es gibt eine Umsetzungsvorschrift (Konverterdaten), der verfügbaren Inhalte in die jeweiligen Bedienelemente und Darstellungsvorgaben des jeweiligen Fahrzeugtyps. Diese Umsetzungsvorschrift für eine definierte Version eines Dienstes ist bevorzugt auch versioniert und an das jeweilige Fahrzeug zu übertragen, wie es in Fig. 3 veranschaulicht ist. Die Bereitstellung der eigentlichen Dienstinhalte ist ebenfalls bevorzugt versioniert.

Durch das Aufteilen der Online-Dienste in einen fahrzeugtyp-unabhängigen Anteil und die fahrzeugtyp-spezifischen Konverterdaten werden Entwicklungsressourcen auf der Serverseite gespart. Es ergeben sich schnellere Entwicklungszyklen und parallele Entwicklungen mehrerer Dienste können realisiert werden. Ein einheitlicher Betrieb der Dienste schafft zusätzliche Synergien. Zeiten, in denen Dienste nicht zur Verfügung stehen aufgrund Modifikationen an den Online-Diensten, werden reduziert oder unter Umständen ganz vermieden.

Ein Verbindungsaufbau, das heißt insbesondere eine Dienstanfrage, über eine Netzwerkverbindung 3 kann wie folgt ablaufen. Das Fahrzeug fragt die Dienste beim Server an. Es bekommt vom Server die Dienstliste als Antwort, basierend auf seine technischen Möglichkeiten und den Berechtigungen (Lizenzen). Bei der Anfrage der Diensteliste kann zusätzliche eine Authentifizierung des Fahrzeugs erfolgen.

In beziehungsweise mit der Dienstliste wird jeweils die Schnittstellenbeschreibung an das Fahrzeug zurückgegeben, also die verfügbaren Dienstfunktionen, und ein Identifizierer, der für dieses Fahrzeug/Endgerät aktuellsten Vorschrift. Das Fahrzeug prüft, ob die im Fahrzeug vorliegende Darstellungsvorschrift noch aktuell ist. Der Benutzer kann optional dem Herunterladen der aktuellsten Darstellungsvorschrift zustimmen, ansonsten erfolgt das Herunterladen im Hintergrund. Das Fahrzeug ruft den Dienst vom Server entsprechend der Schnittstellenbeschreibung vom Server ab. Anschließend werden die Daten entsprechend der Darstellungsvorschrift auf das Bedienkonzept des Fahrzeugs angepasst. Hierdurch ergibt sich eine einheitliche Bereitstellung der jeweiligen Dienste.

Durch die Konverterdaten werden also die Darstellung und die Interaktionsmöglichkeit für den jeweiligen Fahrzeugtyp abgeleitet oder hergeleitet oder realisiert. Durch die Darstellungsschicht auf der Servervorrichtung werden die Daten in dem jeweiligen vom Fahrzeugtyp benötigten Format über die Netzwerkverbindung 3 ausgeliefert. Die Darstellungsschicht greift dann zum Realisieren des Online-Dienstes auf die Standard-Online-Dienste zu, die Fahrzeug-unabhängig sind.

Insgesamt zeigt das Beispiel, wie durch die Erfindung Online-Dienste in Kraftfahrzeugen bereitgestellt werden können.

## Patentansprüche

1. Verfahren zum Steuern eines fahrzeugexternen Online-Dienstes (15, 16) mittels einer Bedieneinrichtung (9) eines Kraftfahrzeugs (1), mit den Schritten:
- bei einem Verbindungsaufbau zu einer den Online-Dienst (15, 16) bereitstellenden Servervorrichtung (2) Erzeugen einer Liste der in der Servervorrichtung (2) verfügbaren Online-Dienste (15, 16) in Abhängigkeit von fahrzeugspezifischen Kennungsdaten und Aussenden der Liste an das Kraftfahrzeug (1), wobei die Kennungsdaten Ausstattungsdaten, welche eine technische Ausstattung des Kraftfahrzeugs (1) beschreiben, enthalten und wobei die im Kraftfahrzeug (1) vorhandenen technischen Randbedingungen bei der Auswahl der Online-Dienste (15, 16) berücksichtigt werden, indem die Liste die tatsächlich im Kraftfahrzeug (1) durch den Benutzer betreibbaren Online-Dienste (15, 16) angibt,
- Abrufen des zu steuernden Online-Dienstes von der Servervorrichtung (2) durch das Kraftfahrzeug (1) anhand einer Schnittstellenbeschreibung des Online-Dienstes (15, 16);
- Ermitteln von fahrzeugindividuell bei der Bedieneinrichtung (9) verfügbaren Bedienelementen (13, 14, 19);
- Bereitstellen von Konverterdaten (29), welche eine Steuervorschrift (G, M) zum Steuern einer Auswahl einer Dienstfunktion (17, 18) des zu steuernden Online-Dienstes (15, 16) in Abhängigkeit von Betätigungssignalen (S) der ermittelten Bedienelemente (13, 14, 19) enthalten, wobei durch die Servervorrichtung (2) für das Kraftfahrzeug (1) die Konverterdaten (29) in Abhängigkeit von einem Fahrzeugtyp (FT1) des Kraftfahrzeugs (1) bereitgestellt werden;
- Ermitteln einer von einem Benutzer an der Bedieneinrichtung (9) durchgeführten Bedieneingabe;
- Auswählen einer von mehreren Dienstfunktionen (17, 18) des Online-Dienstes (15, 16) in Abhängigkeit von der Bedieneingabe und in Abhängigkeit von dem bei der Bedieneingabe betätigten Bedienelement (13, 14, 19) und in Abhängigkeit von den Konverterdaten (29).

2. Verfahren nach Anspruch 1, wobei die Konverterdaten (29) in einer den Online-Dienst bereitstellenden Servervorrichtung (2) durch eine Darstellungsschicht (30) bereitgestellt werden.

3. Verfahren nach einem der vorhergehenden Ansprüche, wobei die Konverterdaten (29) an das Kraftfahrzeug übertragen werden und die Bedieneinrichtung mittels der Konverterdaten (29) konfiguriert wird.

4. Verfahren nach einem der vorhergehenden Ansprüche, wobei eine Anzeigeeinheit (12) der Bedieneinrichtung (9) für fahrzeuginterne Onboard-Dienste eine Darstellungsvorschrift aufweist, durch welche zumindest eine graphische Eigenschaft von Anzeigeelementen der Onboard-Dienste festgelegt wird, und die Konverterdaten (29) eine korrespondierende Darstellungsvorschrift (G) für Anzeigeelemente (20-25) des Online-Dienstes (15, 16) enthalten.

5. Verfahren nach Anspruch 4, wobei eine Blockiereinrichtung in Abhängigkeit von einer Ablehnungseingabe des Benutzers eine Übertragung der korrespondierenden Darstellungsvorschrift (G) blockiert.

6. Verfahren nach einem der vorhergehenden Ansprüche, wobei bei einem Verbindungsaufbau zu der den Online-Dienst (15, 16) bereitstellenden Servervorrichtung (2) die Liste der in der Servervorrichtung (2) verfügbaren Online-Dienste (15, 16) in Abhängigkeit von benutzerspezifischen Kennungsdaten erzeugt und an das Kraftfahrzeug (1) ausgesendet wird, wobei die Kennungsdaten Berechtigungsdaten, welche eine Lizensierung der Online-Dienste (15, 16) für den Benutzer beschreiben, enthalten.

7. Verfahren nach einem der vorhergehenden Ansprüche, wobei die Konverterdaten (29) und/oder der Online-Dienst (17, 18) versioniert bereitgestellt wird.

8. Servervorrichtung (2) mit einer Kommunikationseinrichtung zum Ankoppeln der Servervorrichtung (2) an das Internet (4) und mit einer Prozessoreinrichtung, die dazu ausgelegt ist, einen unabhängig von einem Fahrzeugtyp (FT1, FT2) ausführbare Dienstfunktionen (17, 18) aufweisenden Online-Dienst (15, 16) bereitzustellen und von jedem den Online-Dienst (15, 16) über eine Netzwerkverbindung (3) anfragenden Kraftfahrzeug (1) einen jeweiligen Fahrzeugtyp (FT1, FT2) zu ermitteln und in Abhängigkeit von dem ermittelten Fahrzeugtyp (FT1, FT2) jeweilige Konverterdaten (29), welche eine Steuervorschrift (G, M) zum Steuern einer Auswahl einer der Dienstfunktionen (17, 18) in Abhängigkeit von Betätigungssignalen (S) von Bedienelementen (13, 14, 19) einer Bedieneinrichtung (9) des Kraftfahrzeugs (1) enthalten, bereitzustellen, wobei die Servervorrichtung (2) bei einem Verbindungsaufbau zu der den Online-Dienst (15, 16) bereitstellenden Servervorrichtung (2) eine Liste der in der Servervorrichtung (2) verfügbaren Online-Dienste (15, 16) in Abhängigkeit von fahrzeugspezifischen Kennungsdaten erzeugt und die Liste an das Kraftfahrzeug (1) aussendet,
wobei die Kennungsdaten Ausstattungsdaten enthalten, welche eine technische Ausstattung des Kraftfahrzeugs (1) beschreiben,
wobei die Servervorrichtung (2) dazu eingerichtet ist, bei der Auswahl im Kraftfahrzeug (1) vorhandene Randbedingungen zu berücksichtigen, indem die Liste die tatsächlich im Kraftfahrzeug (1) durch einen Benutzer betreibbaren Online-Dienste (15, 16) angibt.

## Claims

1. Method for controlling a vehicle external online service (15, 16) using an operating device (9) of a motor vehicle (1), with the steps:
- when a connection to a server device (2) providing the online service (15, 16) is established, generating a list of the online services (15, 16) available on the server device (2) based on vehicle-specific identification data and sending the list to the motor vehicle (1), wherein the identification data comprise equipment data describing a technical equipment of the motor vehicle (1) and wherein the technical framework conditions of the motor vehicle (1) are taken into account when selecting the online services (15, 16), by the list indicating the online services (15, 16) that are actually operable in the motor vehicle (1) by the user,
- retrieving, by the motor vehicle (1), the online service to be controlled from the server device (2) based on an interface description of the online service (15, 16);
- determining vehicle-specific operating elements (13, 14, 19) available at the operating device (9);
- providing converter data (29) comprising a control instruction (G, M) for controlling a selection of a service function (17, 18) of the online service (15, 16) to be controlled based on operation signals (S) of the determined operating elements (13, 14, 19), wherein the server device (2) provides the converter data (29) to the motor vehicle (1) based on a vehicle type (FT1) of the motor vehicle (1);
- determining an operating input by a user at the operating device (9);
- selecting one of a plurality of service functions (17, 18) of the online service (15, 16) based on the operating input and based on the operating element (13, 14, 19) at the operating device and based on the converter data (29).

2. Method according to claim 1, wherein the converter data (29) are provided by a presentation layer (30) on the server device (2) providing the online service.

3. Method according to any of the preceding claims, wherein the converter data (29) are transmitted to the motor vehicle and the operating device is configured by means of the converter data (29).

4. Method according to any of the preceding claims, wherein a display unit (12) of the operating device (9) comprises a display instruction for in-vehicle onboard services, which determines at least one graphical property of display elements of the onboard services, and the converter data (29) comprise a corresponding display instruction (G) for display elements (20-25) of the online service (15, 16).

5. Method according to claim 4, wherein a blocking mechanism blocks a transmission of the corresponding display instruction (G) in response to a rejection input from the user.

6. Method according to any of the preceding claims, wherein, when a connection to the server device (2) providing the online service (15, 16) is established, the list of online services (15, 16) available on the server device (2) is generated based on vehicle-specific identification data and sent to the motor vehicle (1), wherein the identification data comprise authorisation data describing a licensing of the online services (15, 16) for the user.

7. Method according to any of the preceding claims, wherein the converter data (29) and/or the online service (17, 18) are provided in a versioned manner.

8. Server device (2) with a communication device for connecting the server device (2) to the internet (4) and with a processor unit configured to provide an online service (15, 16) comprising service functions (17, 18) to be executed independently of a vehicle type (FT1, FT2), and determine a vehicle type (FT1, FT2) of each motor vehicle (1) requesting the online service (15, 16) via a network connection (3), and provide respective converter data (29) based on the determined vehicle type, the converter data comprising a control instruction (G, M) for controlling a selection of one of the service functions (17, 18) based on operation signals (S) from operating elements (13, 14, 19) of an operating device (9) of the motor vehicle (1), wherein the server device (2), when a connection to the server device (2) providing the online service (15, 16) is established, generates a list of the online services (15, 16) available on the server device (2) based on vehicle-specific identification data and sends the list to the motor vehicle (1), wherein the identification data comprise equipment data describing a technical equipment of the motor vehicle (1), wherein the server device (2) is configured to take into account framework conditions of the motor vehicle (1) in the selection, by the list indicating the online services (15, 16) that are actually operable in the motor vehicle (1) by a user.

## Revendications

1. Procédé de commande d'un service en ligne (15, 16) externe au véhicule au moyen d'un dispositif de commande (9) d'un véhicule automobile (1), avec les étapes :
- lors d'un établissement de liaison vers un système serveur (2) fournissant le service en ligne (15, 16), production d'une liste des services en ligne (15, 16) disponibles dans le système serveur (2) en fonction de données d'identification spécifiques au véhicule et envoi de la liste au véhicule automobile (1), les données d'identification contenant des données d'équipement qui décrivent un équipement technique du véhicule automobile (1) et les conditions techniques aux limites qui existent dans le véhicule automobile (1) étant prises en compte lors de la sélection des services en ligne (15, 16) du fait que la liste indique les services en ligne (15, 16) qui peuvent être effectivement exploités par l'utilisateur dans le véhicule automobile (1) ;
- appel du service en ligne à commander par le système serveur (2) via le véhicule automobile (1) à l'aide d'une description d'interface du service en ligne (15, 16) ;
- détermination d'éléments de commande (13, 14, 19) disponibles au niveau du dispositif de commande (9) de manière propre au véhicule ;
- fourniture de données de convertisseur (29) qui contiennent une règle de commande (G, M) destinée à commander une sélection d'une fonction de service (17, 18) du service en ligne à commander (15, 16) en fonction de signaux d'actionnement (S) des éléments de commande (13, 14, 19) déterminés, les données de convertisseur (29) étant fournies par le système serveur (2) pour le véhicule automobile (1) en fonction d'un type de véhicule automobile (FT1) du véhicule automobile (1) ;
- détermination d'une entrée de commande effectuée par un utilisateur au niveau du dispositif de commande (9) ;
- sélection de l'une des fonctions de service (17, 18) du service en ligne (15, 16) en fonction de l'entrée de commande et en fonction de l'élément de commande (13, 14, 19) actionné lors de l'entrée de commande et en fonction des données de convertisseur (29).

2. Procédé selon la revendication 1, dans lequel les données de convertisseur (29) sont fournies par une couche de présentation (30) dans un système serveur (2) fournissant le service en ligne.

3. Procédé selon l'une quelconque des revendications précédentes, dans lequel les données de convertisseur (29) sont transmises au véhicule automobile et le dispositif de commande est configuré au moyen des données de convertisseur (29).

4. Procédé selon l'une quelconque des revendications précédentes, dans lequel une unité d'affichage (12) du dispositif de commande (9) pour des services embarqués internes au véhicule comporte une règle de présentation, par laquelle au moins une propriété graphique d'éléments d'affichage des services embarqués est fixée, et les données de convertisseur (29) contiennent une règle de présentation correspondante (G) pour des éléments d'affichage (20-25) du service en ligne (15, 16).

5. Procédé selon la revendication 4, dans lequel un dispositif de blocage bloque une transmission de la règle de présentation correspondante (G) en fonction d'une entrée de refus de l'utilisateur.

6. Procédé selon l'une quelconque des revendications précédentes, dans lequel, lors d'un établissement de liaison vers le système serveur (2) fournissant le service en ligne (15, 16), la liste des services en ligne (15, 16) disponibles dans le système serveur (2) est produite en fonction de données d'identification spécifiques à l'utilisateur et est envoyée au véhicule automobile (1), les données d'identification contenant alors des données d'autorisation qui décrivent une licence de l'utilisateur pour des services en ligne (15, 16).

7. Procédé selon l'une quelconque des revendications précédentes, dans lequel les données de convertisseur (29) et/ou le service en ligne (17, 18) sont fournies sous différentes versions.

8. Système serveur (2) avec un dispositif de communication destiné à la connexion du système serveur (2) à Internet (4) et avec un dispositif processeur qui est conçu pour fournir un service en ligne (15, 16) comportant des fonctions de service (17, 18) exécutables indépendamment d'un type de véhicule (FT1, FT2) et pour déterminer un type de véhicule respectif (FT1, FT2) pour chaque véhicule automobile (1) demandant le service en ligne (15, 16) par l'intermédiaire d'une liaison de réseau (3) et pour fournir en fonction du type de véhicule déterminé (FT1, FT2) des données de convertisseur respectives (29) qui contiennent une règle de commande (G, M) destinée à commander une sélection de l'une des fonctions de service (17, 18) en fonction de signaux d'actionnement (S) d'éléments de commande (13, 14, 19) d'un dispositif de commande (9) du véhicule automobile (1),
dans lequel le système serveur (2) produit lors d'un établissement de liaison vers le système serveur (2) fournissant le service en ligne (15, 16) une liste des services en ligne (15, 16) disponibles dans le système serveur (2) en fonction de données d'identification spécifiques au véhicule et envoie la liste au véhicule automobile (1),
dans lequel les données d'identification contiennent des données d'équipement qui décrivent un équipement technique du véhicule automobile (1)
et dans lequel le système serveur (2) est conçu pour prendre en compte des conditions techniques aux limites qui existent dans le véhicule automobile (1) lors de la sélection, du fait que la liste indique les services en ligne (15, 16) pouvant être effectivement exploités par un utilisateur dans le véhicule automobile (1).
